(19) Europäisches Patentamt
European Patent Office
Office européen des brevets

(11) **EP 2 560 374 A1**

(12) **EUROPÄISCHE PATENTANMELDUNG**

(43) Veröffentlichungstag:
**20.02.2013 Patentblatt 2013/08**

(51) Int Cl.:
*H04N 5/341* (2011.01)   *H04N 5/357* (2011.01)

(21) Anmeldenummer: **11177672.0**

(22) Anmeldetag: **16.08.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Baumer Optronic GmbH**
**01454 Radeberg (DE)**

(72) Erfinder:
• **Ihlefeld, Joachim**
**01067 Dresden (DE)**

• **Pleikies, Johannes**
**01099 Dresden (DE)**
• **Großmann, Hans-Peter**
**01309 Dresden (DE)**

(74) Vertreter: **Strauss, Steffen**
**Baumer Innotec AG**
**Hummelstrasse 17**
**Group Intellectual Property**
**8501 Frauenfeld (CH)**

(54) **Kamera-Vorrichtung mit Komponenten zur Optimierung des Signal-Rausch-Verhältnisses**

(57)   Der Erfindung liegt die Aufgabe zugrunde, ein möglichst rauscharmes Auslesen des Ladungsbildes eines CCD-Sensors zu realisieren. Die Erfindung sieht zur Lösung dieser Aufgabe eine Recheneinrichtung vor, welche aus den vorgesehenen Parametern der nächsten Bildaufnahme der Kamera die optimale Pixelfrequenz und die optimale Anzahl von Abtastungen für die gewählte Betriebsart ermittelt.

Fig. 1:

**Beschreibung**

In der Mikroskopie, in Inspektionsanwendungen, in der Halbleiterindustrie und in anderen automatisierten Anwendungen mit hohen Qualitätsanforderungen werden programmierbare Kamerasysteme eingesetzt.

Diese Systeme verfügen über die programmierbare Möglichkeit hoch auflösende Aufnahmen des gesamten Bildes in einer langsamen Betriebsart bereitzustellen. Ferner existieren zur schnellern Auslesung von Teilbildern zusätzliche Betriebsarten.

Hochempfindliche Systeme verfügen über technische Mittel, das Signal/Rausch-Verhältnis (SNR) zu verbessern. Dazu dienen in erster Linie Kühlsysteme, die durch Sensorkühlung die Erzeugung störender Rauschladungen vermindern. Ferner sind Systeme bekannt, die das Ladungsbild in mehreren Betriebsarten unterschiedlich schnell auslesen und somit über besonders rauscharme Betriebsarten verfügen, die jedoch lange Auslesezeiten erfordern.

Für eine Reihe von Applikationen ist die lange Auslesezeit in den besonders rauscharmen Modi ungünstig, da die zeitliche Dynamik von Echtzeitprozessen nicht präzise genug erfasst werden kann.

Die Aufgabe der Erfindung besteht daher darin, durch vorzugsweise automatisierte Anpassung der Betriebsart der Kamera an die vordefinierten Betriebsparameter das technisch mögliche Rauschoptimum der Kamera, gegebenenfalls auch ohne aufwändige mehrstufige Kühlung zu erreichen. Es ist weiterhin Zweck der Erfindung, ein möglichst rauscharmes Auslesen des Ladungsbildes eines CCD-Sensors (Charge Coupled Device) zu realisieren, um eine erforderliche Lichtstärke zu reduzieren. Dies ist besonders dort von Vorteil, wo lichtempfindliche Proben untersucht werden sollen. Eine wichtige Anwendung diesbezüglich ist die Fluoreszenzmikroskopie an biologischen Proben. Hier führen hohe Lichtmengen schnell zu einer Schädigung der Proben.

Die Erfindung sieht zur Lösung dieser Aufgabe ein Verfahren und eine Vorrichtung zur Signalverarbeitung für eine sich selbst optimierende, programmierbare Bildaufnahmevorrichtung vor.

Im Speziellen ist zur erfindungsgemäßen Optimierung des Signal-Rausch-Verhältnisses eine Kamera-Vorrichtung vorgesehen, die wenigstens einen CCD-Sensor, einen Analog-Digital-Wandler und eine Recheneinrichtung umfasst. Mit dem Analog-Digital-Wandler sind die analoge Signale der Pixel in digitale Signale wandelbar. Mit der Recheneinrichtung ist anhand von variablen Betriebsparametern der Kamera-Vorrichtung die Pixelfrequenz ermittelbar, bei der bei gegebener Abtastfrequenz des Analog-Digital-Wandlers das Rauschen des Bildsignals minimal ist. Die Kamera-Vorrichtung umfasst ferner eine Einrichtung zur Ansteuerung des CCD-Sensors mit der von der Recheneinrichtung ermittelten Pixelfrequenz.

Als Rauschen wird im Sinne der Erfindung dabei die Standardabweichung des digitalisierten Bildes im Dunkeln verstanden, welches die Überlagerung aus Generations-Rekombinationsrauschen und dem Ausleserauschen umfasst. Vorzugsweise ist die Recheneinrichtung mit dem Analog-Digital-Wandler zur Einstellung der ermittelten Pixelfrequenz entsprechend verschaltet. Denkbar ist aber auch, dem Benutzer die optimale Pixelfrequenz anzuzeigen welche über eine Benutzerschnittstelle wählbar ist. Allgemein ist daher eine Einrichtung zur Einstellung der ermittelten Pixelfrequenz vorgesehen.

Ferner umfasst die Anmeldung ein erfindungsgemässes Verfahren zur Bildaufnahme mittels eines CCD-Sensors einer Kamera-Vorrichtung mit den folgenden Verfahrensschritten:

- mit einem Analog-Digital-Wandler werden analoge Signale der Pixel in digitale Signale gewandelt,
- mit einer Recheneinrichtung wird anhand von variablen Betriebsparametern der Kamera-Vorrichtung die Pixelfrequenz ermittelt, bei der bei gegebener Abtastfrequenz des Analog-Digital-Wandlers das Rauschen des Bildsignals minimal ist, und
- von einer Einrichtung der Kamera-Vorrichtung wird mit der von der Recheneinrichtung ermittelten Pixelfrequenz der CCD-Sensor angesteuert.

Die variablen Betriebsparameter umfassen hierbei erfindungsgemäss eine Arbeitstemperatur des CCD-Sensors und / oder wenigstens einen Bildaufnahmeparameter, vorzugsweise einen gewählten Bildausschnitt und / oder einen Auslesemodus des CCD-Sensors, beispielsweise ein Binning und/oder eine Unterabtastung.

In bevorzugter Ausgestaltung der Erfindung ist ein Taktgenerator vorgesehen, der den Pixeltakt steuert. Dieser Taktgenerator ist dazu eingerichtet, die Pixelfrequenz für das Auslesen des CCD-Sensors ansteuerbar zu variieren, wobei dabei das Taktsignal des Taktgenerators die Pixelfrequenz des CCD-Sensors erzeugt. Mit dem Analog-Digital-Wandler wird das analoge Ausgangssignal des CCD-Sensors in einen digitalen Wert gewandelt.

Ferner ist ein weiterer Taktgenerator vorgesehen. Dieser weitere Taktgenerator steuert den Analog-Digital-Wandler an, wobei er so ausgebildet ist, dass aufgrund dessen ausgegebener Abtastfrequenz bei hinreichend niedriger Pixelfrequenz der Analog-Digital-Wandler sowohl den Signal-Wert, als auch den Reset-Wert eines Pixels jeweils mehrfach hintereinander abtastet.

Mittels eines programmierbaren Filters, der vorzugsweise Bestandteil der digitalen Signalverarbeitung ist, werden gemäß noch einer Weiterbildung der Erfindung die abgetasteten Signal-Werte und die abgetasteten Reset-Werte zusammengefasst. Auf diese Weise wird die Bandbreite des ausgelesenen Signals begrenzt und damit das Signal/ Rausch-Verhältnis verbessert.

Die Recheneinrichtung kann zusätzlich zu den variablen Betriebsparametern der Bildaufnahme Kenngrößen der Kamera berücksichtigen und anhand dessen die Pixelfrequenz ermitteln, bei welcher bei gegebener Abtastfrequenz des Analog-Digital-Wandlers das Rauschen des Bildsignals minimal ist.

Ein variabler Betriebsparameter, welche das Rauschen beeinflusst, ist die Temperatur des CCD-Sensors. Diese kann durch einen Temperatursensor gemessen und der Recheneinrichtung übermittelt werden.

Die Auslesezeit des CCD-Sensors, welche das Generations-Rekombinationsrauschen beeinflusst, wird durch den Anteil der Auslesezeit der Pixel sowie durch die Dauer von vertikalen Schiebetakten bestimmt. Die Auslesezeit wird dabei durch den gewählten Bildausschnitt beeinflusst.

Demgemäß kann der gewählte Bildausschnitt als ein weiterer variabler Betriebsparameter der Bildaufnahme zur Bestimmung der Pixelfrequenz verwendet werden. Ebenso wird die Auslesezeit vom Auslesemodus beeinflusst. Als Auslesemodi seien hier insbesondere ein Zusammenfassung von Pixeln("Binning") sowie eine Unterabtastung ("Subsampling") genannt.

Eine Rauschoptimierung wird erfindungsgemäß dadurch erreicht, dass die Signal- und Reset-Werte der einzelnen Pixel jeweils mehrfach abgetastet und die Pixelfrequenz variiert wird, um für die zu der Pixelfrequenz sich ergebende Anzahl der Abtastungen den niedrigstmöglichen Rauschanteil zu erzielen. Es hat sich gezeigt, dass es eine optimale Anzahl von Abtastvorgängen für den Signal- und Reset-Wert gibt. Der Grund hierfür liegt darin, dass bei niedrigen Frameraten, beziehungsweise langen Auslesezeiten, das Generations-Rekombinationsrauschen ansteigt. Auf der anderen Seite muss mit steigender Pixelfrequenz die Bandbreite der analogen und digitalen Ausleseelektronik erhöht werden. Somit steigen bei steigender Pixelfrequenz die Rauschanteile der Ausleseelektronik. Aufgrund dieser gegenläufigen Mechanismen existiert ein globales Minimum des Rauschens. Anstelle einer nach dem Stand der Technik üblichen mehrfachen Belichtung und Bilderfassung mit einer anschließenden Mittelung zur Reduktion des Rauschens, werden hier erfindungsgemäß die einmalig aufgenommenen Pixelwerte mehrfach abgetastet und gemittelt.

Der zeitliche Verlauf von Signal- und Reset-Wert, sowie der Übergang vom Signal- zum Reset-Wert folgt typischerweise nicht einer idealen Stufenfunktion. Somit kann der Signal-und Reset-Wert, wenn der Signalverlauf nicht einem idealen Rechtecksignal entspricht, vom Zeitpunkt der Abtastung abhängen. Das führt dazu, dass die ausgelesenen Werte von der Anzahl der Abtastungen und deren Zeitpunkten und damit auch von der eingestellten Pixelfrequenz abhängig sind.

Um eine möglichst lineare Kennlinie und das optimale Rauschen der aus Signal- und Reset-Werten ermittelten Bildintensitätswerte der Pixel zu erhalten, ist gemäß einer Weiterbildung der Erfindung vorgesehen, dass von der Recheneinrichtung zunächst die optimale Betriebsart der Kamera ermittelbar ist und anschließend den im Signalzweig angeordneten, programmierbaren Filter so zu parametrieren, dass eine optimale Signalverarbeitung ausgeführt wird.

Im Sinne eines digitalen Filters, werden die einzelnen abgetasteten Werte mit Koeffizienten gewichtet. Zudem kann über die Änderung, beziehungsweise der Anpassung der Wichtungs- beziehungsweise Filterkoeffizienten eine einfache Parametrierung des programmierbaren Filters erzielt werden. Demgemäß ist in Weiterbildung der Erfindung die Recheneinrichtung eingerichtet, die Koeffizienten abhängig von der ermittelten Pixelfrequenz auszuwählen.

Wird die Pixelfrequenz variiert, ist es sinnvoll, die Filterkoeffizienten neu zu berechnen oder aus einem Speicher für Kenngrößen auszulesen.

Zur Ermittlung der Filterkoeffizienten wird in Weiterbildung der Erfindung zuerst der Signalverlauf approximiert. Je nach Ansteuerfrequenz des CCD-Sensors, der Abtastfrequenz des Analog-Digital-Wandlers, der analogen Bandbreite und der Eigenschaften des CCD-Ausgangsverstärkers ergibt sich ein bestimmter Verlauf des digitalisierten Signals. Der programmierbare Filter wird nun so ausgelegt, dass seine Impulsantwort dem gespiegelten, "typischen" Signal des CCD-Sensors entspricht. Dies wird über die Filterkoeffizienten realisiert. Am Ausgang des programmierbaren Filters ergibt sich nun die Autokorrelationsfunktion des "typischen", beziehungsweise zu erwartenden, Signals des CCD-Sensors multipliziert mit einem Faktor welcher den jeweiligen Wert des Pixels wiedergibt. Ist der programmierbare Filter auf diese Weise eingestellt, entspricht er dem Optimalfilter für das Signal des CCD-Sensors, ein Filter welcher optimal alle Rauschanteile unterdrückt die nicht im Frequenzband des "typischen" Signals des CCD-Sensors liegen. Diese Ausprägung der Erfindung hat eine optimale Signalverarbeitung.

Nach dem programmierbaren Filter wird noch einmal unterabgetastet, so dass aus den mehreren abgetasteten und gefilterten Signal-Werten ein einzelner Signalwert und aus den mehreren abgetasteten und gefilterten Werten des Reset-Werts ein einzelner Reset-Wert ermittelt wird. Die Differenz des Signal- und Reset-Werts repräsentiert dabei die Bildintensität des jeweiligen Pixels. Der Wert am Ausgang des Filters kann dann zum korrekten Zeitpunkt abgetastet werden, welcher sich aus der Ansteuerung des CCD-Sensors ergibt. In der Ausprägung der Erfindung mit optimaler Signalverarbeitung muss das Ergebnis mit Hilfe der Autokorrelationsfunktion des "typischen" Signals des CCD-Sensors noch korrekt normiert werden.

Weiterhin könnten zwei Filter genutzt werden, einen für den Reset-Pegel und einen für den Signalpegel. Am Ende der Kette wird typischerweise die Differenz aus dem Reset- und dem Signalwert gebildet und als Pixelwert weiterverarbeitet.

Des Weiteren bestimmt die Pixelfrequenz die Auslesezeit des CCD-Sensors. Daraus resultiert ein Rauschanteil, das Generation-Rekombinations-Rauschen, das im Zusammenhang mit dem Ausleserauschen zu betrachten ist.

Das vorstehend beschriebene Ermitteln der Pixelfrequenz kann in einfacher Weise mit einem in der Recheneinrichtung implementierten Optimierungsalgorithmus durchgeführt werden, bei welchem verschiedene Anzahlen von Abtastungen angenommen und aus dem daraus jeweils berechneten Rauschanteilen der niedrigste Wert ermittelt wird.

Insbesondere kann dazu die Anzahl von Abtastungen schrittweise verändert werden. Wird dann bei einer Anzahl N+l, beziehungsweise N-1 ein höherer Wert des Rauschanteils ermittelt, als bei der zuvor betrachteten Anzahl N, so wird der zuvor betrachtete Wert N der Abtastungen verwendet, um die Pixelfrequenz zu ermitteln.

Die Pixelfrequenz ergibt sich gemäß einer bevorzugten Ausführungsform der Erfindung generell aus der Taktfrequenz des weiteren Taktgenerators dividiert durch die Gesamtanzahl der Abtastungen des Signalwerts und des Reset-Werts. Generell, ohne Beschränkung auf diese Weiterbildung der Erfindung ist es zur Realisierung einer einfachen Abtastung und für ein möglichst rauscharmes Signal weiterhin günstig, wenn der Signalwert und der Reset-Wert jeweils gleich oft abgetastet werden.

Damit ergibt sich gemäß dieser Ausführungsform für die Pixelfrequenz $f_{Pixel}$ der Wert: $f_{Pixel} = f_s/(2 \cdot N)$, wobei $f_s$ die Abtastfrequenz des Analog-Digital-Wandlers und N die Anzahl der Abtastungen des Signal- und Reset-Werts ist, für die der geringste Wert des Rauschens berechnet wurde.

Da erfindungsgemäß für jedes Bild eine Rauschoptimierung durchgeführt wird, ohne dass mehrere Bilder aufgenommen und zu einem Einzelbild addiert werden müssen, eignet sich die Erfindung besonders für die Aufnahme von Bildsequenzen.

Eine erfindungsgemäße Kamera-Vorrichtung, integriert in ein Mikroskop, kann aus Benutzersicht erhebliches leisten. Wie oben bereits dargelegt, ist die Erfindung besonders für empfindliche Fluoreszenzmessungen geeignet. Bei diesen Messungen wird versucht, die Belichtungsenergie, also die Dauer, Anzahl und Stärke der Belichtungen, zu minimieren.

Genau hier hat die Erfindung ihre Stärke. Mit einer Optimierung des Auslesens des CCD-Sensors, muss die für eine Probe einer Fluoreszenzmessung schädliche Belichtung nicht ausgewertet werden, um die Messgenauigkeit zu erreichen. Die Erfindung ermöglicht es damit auch, die Belichtung selber an die optimierten Rauscheigenschaften der Kamera-Vorrichtng anzupassen.

In der Fluoreszenzmikroskopie werden weiterhin oft verschiedene Fluoreszenz-Marker eingesetzt, die mit unterschiedlichen Wellenlängen angeregt werden. Daher ist vielfach eine mehrfache Belichtung und Messung einer zu untersuchenden Probe erforderlich. Es ist ersichtlich, dass in diesem Fall die Belichtungsintensität noch kritischer ist.

Die Erfindung wird nachfolgend anhand von Ausführungsbeispielen und unter Bezugnahme auf die beigeschlossenen Zeichnungen näher erläutert. Dabei bezeichnen gleiche Bezugszeichen gleiche oder entsprechende Teile oder Elemente.

Es zeigen:

Fig. 1    ein Blockschaltbild der Komponenten einer erfindungsgemässen Kamera-Vorrichtung,
Fig. 2    ein Diagramm des Rauschsignals als Funktion der Bildwiederholrate,
Fig. 3    eine detaillierte Ansicht der Komponenten der erfindungsgemässen Kamera-Vorrichtung,
Fig. 4    ein Zeitablauf-Diagramm bei einem einmaligen Auslesen des Reset- und des Signal-Werts,
Fig. 5    ein Zeitablauf-Diagramm eines mehrmaligen Auslesens des Reset-Werts und des Signal-Werts,
Fig. 6    einen zeitlichen Verlauf des Signals des CCD-Sensors,
Fig. 7    den Aufbau eines FIR-Filters und
Fig. 8    einen Programmablaufplan zur Ermittlung der optimalen Anzahl von Abtastwerten.

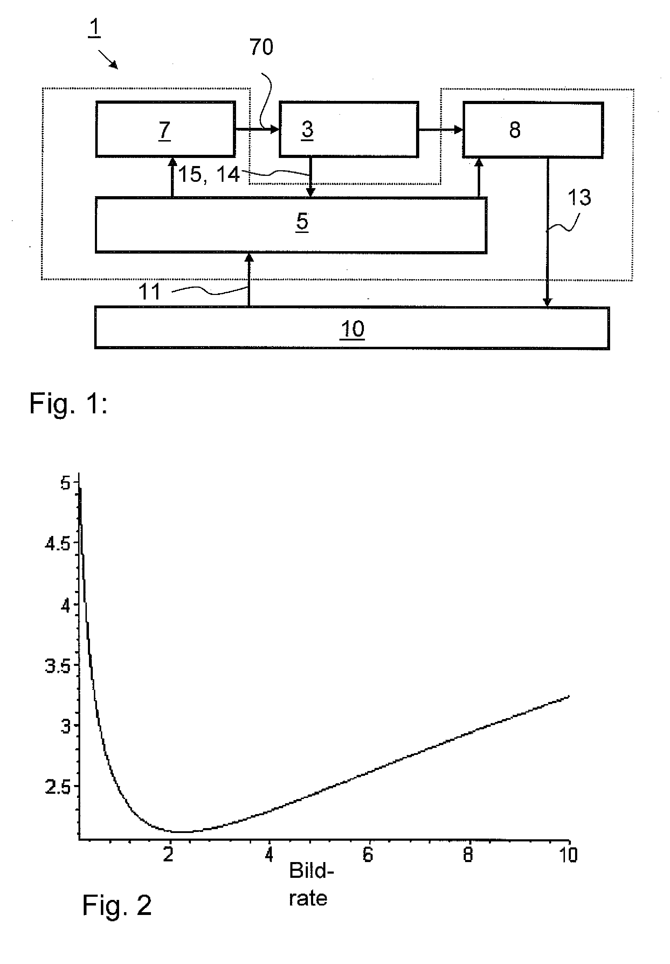

Fig. 1 zeigt ein vereinfachtes Blockschaltbild einer erfindungsgemäßen Kamera-Vorrichtung 1. Die Kamera-Vorrichtung 1 umfasst einen CCD-Sensor 3, der mit variierbarer Pixelfrequenz ausgelesen wird. Demgemäß bestimmt die Pixelfrequenz auch die Bildrate. Die Pixelfrequenz wird durch einen Takt 70 bestimmt, welcher von einem Taktgenerator 7 erzeugt wird.

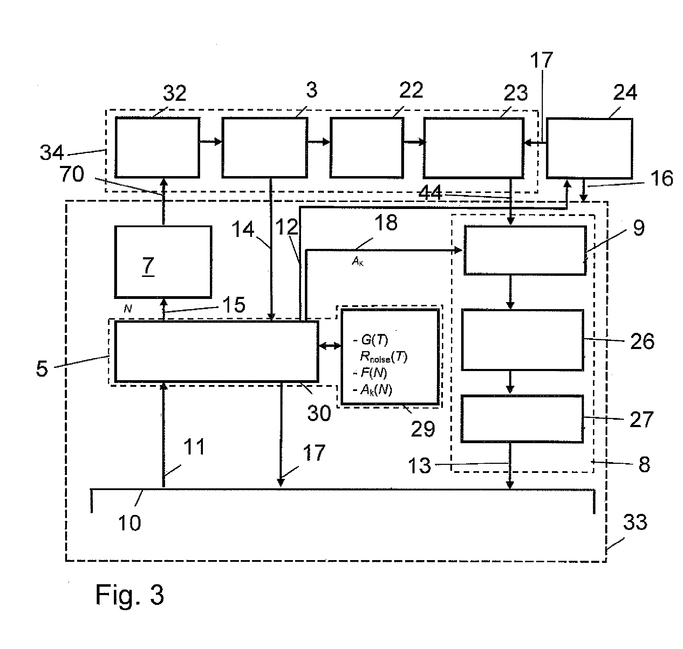

Die mit der Pixelfrequenz ausgelesenen Signalwerte werden mittels eines in Fig. 3 dargestellten Analog-Digital-Wandlers 23 in digitale Signale gewandelt und von einer digitalen Schaltung zu einer Signalverarbeitung 8 weiterverarbeitet. Dieser beinhaltet einen programmierbaren Filter 9, welcher die erfindungsgemäß jeweils mehrfach abgetasteten Signal-Werte 44 und Reset-Werte 43 eines Pixels zusammenfasst.

Die Kamera-Vorrichtung 1 umfasst weiterhin eine Recheneinrichtung 5, welche aus variablen Betriebsparametern 11 der Bildaufnahme einschließlich der ermittelten Arbeitstemperatur 14 des CCD-Sensors 3 und Kenngrößen der Kamera-Vorrichtung 1 die Pixelfrequenz ermittelt, bei welcher das Rauschen des Bildsignals minimal ist. Die Bildausleseparameter 11 werden dabei unter anderem von einer Benutzerschnittstelle 10 übergeben. Beispielsweise kann der Benutzer nur einen Bildausschnitt auswählen. Da dann gegenüber einer Vollbild-Aufnahme insgesamt weniger Bilddaten ausgelesen werden müssen, reduziert sich das Generations-Rekombinations-Rauschen. Demgemäß wird der gewählte Bildausschnitt als Aufnahmeparameter für die Ermittlung der für das Rauschen günstigsten Pixelfrequenz durch die Recheneinrichtung 5 verwendet. Ist kein Bildausschnitt ausgewählt, wird von der Recheneinrichtung 5 dagegen die Auslesezeit des gesamten Bildes der Berechnung zugrunde gelegt.

Die Recheneinrichtung 5 bestimmt die in Bezug auf den zu erwartenden Rauschanteil günstigste Pixelfrequenz. Durch die Verschaltung mit dem Taktgenerator 7 wird dann diese Pixelfrequenz im Taktgenerator 7 für das Auslesen des CCD-Sensors 3 verwendet.

Der einstellbare Parameter ist die Frequenz des horizontalen Schiebetaktes des CCD-Sensors 3. Bei Ansteuerung des CCD-Sensors 3 mit veränderlicher Pixelfrequenz wird die Ausleseelektronik dahingehend eingestellt, dass ein optimales Signal-Rausch-Verhältnis erzielt wird.

Dies wird durch dynamische Anpassung eines programmierbaren Filters erreicht. Bei Einhaltung des Abtasttheorems und Optimalfilterung steigt die Standardabweichung des Ausleserauschens proportional mit der Wurzel aus der gesamten effektiven Bandbreite der analogen und digitalen Filterstrecke. Folglich steigt das Ausleserauschen bei idealer Ausführung der Signalverarbeitung näherungsweise proportional mit der Wurzel aus der Pixelfrequenz.

Eine andere Rauschquelle ist das Generations-Rekombinations-Rauschen. Dieses Rauschen hat seine Ursache in der thermischen Generierung von Ladungsträgern während der Verweildauer der akkumulierten Ladung in den CCD Strukturen. Die Standardabweichung des Dunkelsignals verhält sich proportional zur Wurzel des Mittelwertes des Dunkelsignals. Somit steigt die Standardabweichung dieses Rauschanteils proportional mit der Auslesezeit und umgekehrt proportional mit der Wurzel aus der Bildfrequenz.

Das aus diesen beiden Komponenten zu erwartende Rauschsignal ist in Fig. 2 als Funktion der Bildrate skizziert. Wie ersichtlich ist, gibt es eine Pixelfrequenz und eine Abtastfrequenz, bei der ein globales minimales Rauschen erreicht wird. Das auf der Ordinate aufgetragene Rauschsignal ist dabei in willkürlichen Einheiten angegeben. Bei dem in Fig. 2 dargestellten Beispiel wird das minimale Rauschen bei einer Bildwiederholrate von etwa zwei Bildern pro Sekunde erreicht. Der jeweilige Wert hängt dabei insbesondere von der Temperatur und der Auslesezeit des Bildes ab. Letztere wird beeinflusst durch die Größe des ausgelesenen Bildbereichs, sowie dem Auslesemodus, beispielsweise einem Binning oder einer Unterabtastung. Auch Sensoreigenschaften und die Charakteristik der Ausleseelektronik können die Lage des Minimums beeinflussen.

Das Ausleserauschen umfasst das Rauschen der Ausgangsverstärker des CCD-Sensors 3, der weiteren Elektronik sowie der Analog-Digital-Wandlung und den Rauscheinflüssen des Analog-Digital-Wandlers. Es gibt eine weitere Rauschquelle, das kTC-Rauschen, welches durch korrelierte Doppelabtastung unterdrückt werden kann und hier daher nicht betrachtet wird. Die korrelierte Doppelabtastung ist die Differenzbildung aus dem Signal-Wert 44 und dem Reset-Wert 43, dargestellt mit der Einrichtung 26 in der Fig. 3.

Das Dunkelrauschen der Photodioden des CCD-Sensors 3 kann durch die Erfindung zwar nicht direkt beeinflusst werden, es kann aber im Rauschmodell mit berücksichtigt werden.

Das Steuerverfahren, welches den optimierten Betriebsmodus einstellt, beinhaltet ein Rauschmodell des CCD-Sensors 3, welches aus den Eingangsgrößen wie dem Betriebsmodus der Kamera-Vorrichtung 1, den Eigenschaften des CCD-Sensors 3, der Temperatur und Eigenschaften der Ausleseelektronik, die zu erwartenden Rauschparameter berechnet.

Vor dem Erfassen jedes Ladungsbildes wird die optimale Pixelfrequenz bestimmt und die Sensorsteuerung und Ausleseelektronik entsprechend angepasst. Der Nutzer der erfindungsgemässen Kamera-Vorrichtung 1 kann gemäß einer vorteilhaften Weiterbildung der Erfindung über eine Benutzerschnittstelle 10 zwischen unterschiedlichen Optimierungskriterien wählen (dargestellt in Fig. 3). Solche Kriterien können sein:

- die Bestimmung des Betriebsmodus mit globalem Rauschminimum ohne Einbeziehung der Bildrate,
- die Bestimmung des Betriebsmodus mit dem minimalen Rauschen bei vorgegebener minimaler Bildfrequenz, oder
- die Bestimmung des Betriebsmodus mit der maximalen Bildfrequenz bei vorgegebenem maximalem Rauschen.

Auch diese Optimierungskriterien stellen variable Betriebsparameter dar und werden in Weiterbildung der Erfindung im Rauschmodell zur Ermittlung der für ein gutes Signal-Rausch-Verhältnis günstigsten Pixelfrequenz einbezogen. Das erste genannte Kriterium entspricht der erfindungsgemäßen Rauschoptimierung ohne weitere Nebenbedingungen. Die beiden weiteren Optimierungskriterien können als zusätzliche Nebenbedingungen bei der Bestimmung der optimalen Anzahl N von Abtastungen durch die Recheneinrichtung 5 ebenfalls erfindungsgemäß berücksichtigt werden. In allen Fällen wird dabei vorzugsweise jeweils als Betriebsmodus die Anzahl N von Abtastungen bestimmt.

Eine Ausführungsform der erfindungsgemässen Kamera-Vorrichtung 1 mit variabler Abtastfrequenz und darauf optimierter analoger Ausleseelektronik, ist genauer in Fig. 3 dargestellt. Die Kamera-Vorrichtung 1 unterteilt sich in einen analogen Teil 34 und einen digitalen Teil 33. Als analoger Teil 34 wird im Sinne der Erfindung der Teil der Komponenten verstanden, welche die analoge Signalverarbeitung durchführen. Die Komponenten können dabei auch digital arbeitende Elemente, wie beispielsweise Zähler, oder auch Elemente der Treiberschaltung 32 umfassen. Der digitale Teil 33 umfasst diejenigen Komponenten, welche die Verarbeitung der digitalisierten Signalwerte durchführen.

Kern der Erfindung ist, durch Variieren der Pixelfrequenz des CCD-Sensors 3, das Optimum im Gesamtrauschen des Systems unter Berücksichtung der Betriebsparameter 11 und der Arbeitstemperatur 14 des CCD-Sensors 3, zu erzielen.

Das analoge Ausgangssignal des CCD Sensors 3 wird vor der Analog-Digital-Wandlung durch den Analog-Digital-Wandler 23 zu Zwecken des Anti-Aliasing mittels eines analogen Filters 22 einer Tiefpass- oder Bandpass-Filterung unterzogen. Als obere Grenzfrequenz des Filters 22 wird hierbei in Einklang mit dem Abtasttheorem vorzugsweise ein Wert kleiner der halben Abtastfrequenz $f_s/2$ gewählt.

Die Analog-Digital-Wandlung geschieht mit der Abtastfrequenz $f_s$, welche durch den weiteren Taktgenerator 24, der als Hoch-Präzisions-Taktquelle ausgebildet ist, bereitgestellt wird. Diese Frequenz stellt in Weiterbildung der Erfindung auch gleichzeitig den Haupttakt der nachfolgenden digitalen Logik des digitalen Teils 33 der Kamera-Vorrichtung 1 dar. Anders als in Fig. 3 dargestellt, kann daher der weitere Taktgenerator 24 als Bestandteil des digitalen Teils 33 der Kamera-Vorrichtung 1 verstanden werden. Weiterhin kann die halbe Abtastfrequenz $f_s/2$ die maximale horizontale Pixelfrequenz am CCD-Sensor 3 sein, da zur Ermittlung des Pixelsignals mindestens einmal der Signal-Wert 44 und mindestens einmal der Reset-Wert 43 eines Pixels abzutasten ist. Für erfindungsgemäße Betriebsmodi wird dabei jeder dieser Werte mehrmals hintereinander, also mindestens zweimal, abgetastet.

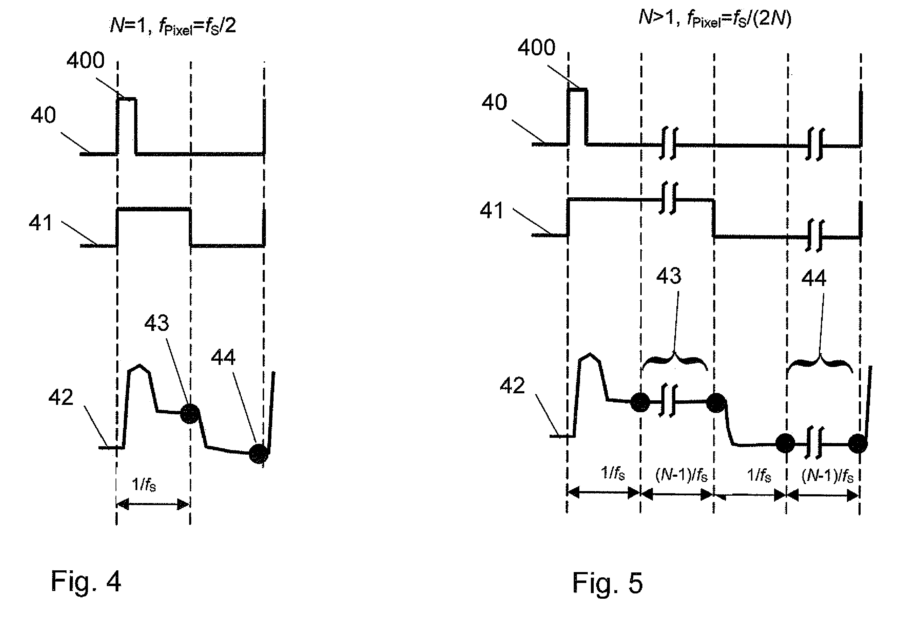

Die Taktsteuerung des CCD-Sensors 3 mit resultierendem Ausgangssignal ist in Abhängigkeit vom ausgewählten Wert N, beziehungsweise der ausgewählten Anzahl der Auslesevorgänge in den Fig. 4 und Fig. 5 dargestellt.

Der Pixeltakt $f_{Pixel}$ des CCD-Sensors 3 ergibt sich zu $f_{Pixel} = f_s/(2.N)$. N ist eine ganzzahlige Zahl größer 1, welche von einem Kontroller 30 der Recheneinrichtung 5 festgelegt wird. N ist dabei die Anzahl der Messwerte des jeweiligen Reset-Werts 43 und Signalwerts 44 und dementsprechend eine ganze Zahl größer null.

Die Signale zur Ansteuerung des CCD-Sensors 3, unter anderem Vertikaltakte, Horizontaltakte, und das Reset-Gate-Signal werden vom Taktgenerator 7 erzeugt. Dieser Taktgenerator 7 ist erfindungsgemäß dazu eingerichtet, die Pixelfrequenz für das Auslesen des CCD-Sensors 3 ansteuerbar zu variieren.

In Fig. 4 sind Diagramme des Zeitablaufs bei einem einmaligen Auslesen des Reset- und des Signalwerts 43, 44, also entsprechend einer üblichen Abtastung der Pixel eines CCD-Sensors 3 dargestellt.

Fig. 5 zeigt die entsprechenden Diagramme bei mehrmaligem Auslesen beider Werte 43, 44.

Dargestellt sind die zeitlichen Verläufe des Reset-Gate-Signals 40, des Horizontalschiebetaktes 41 sowie des resultierende Ausgangssignal 42, wie es am Eingang des Analog-Digital-Wandlers 23 vorliegt.

Nach einem Reset-Gate-Impuls 400 stellt sich der Pegel des Ausgangssignals 42 auf den Reset-Wert 43 ein. Der Übergang zum endgültigen Reset-Wert 43 wird erfindungsgemäß, wie in Fig. 5 dargestellt durch N Abtastpunkte erfasst. Nach dem Schaltsignal des horizontalen Schiebetakts 41 stellt sich der Ausgangspegel auf den Signal-Pegel, beziehungsweise den Signal-Wert 44 ein.

Auch der Übergang zum endgültigen Signal-Wert 44 wird erfindungsgemäß wie in Fig. 5 gezeigt, durch N Abtastpunkte erfasst. In Fig. 5 sind dabei der Einfachheit halber nur jeweils der erste und letzte Abtastzeitzeitpunkt des Reset-und des Signalwerts 43, 44 gezeigt.

Die Signal-Werte 44 werden nach der Analog-Digital-Wandlung, wie in Fig. 3 dargestellt, einem programmierbaren Filter 9 zugeführt, welcher Bestandteil der Einrichtung zur Ermittlung der Bilddaten 8 ist.

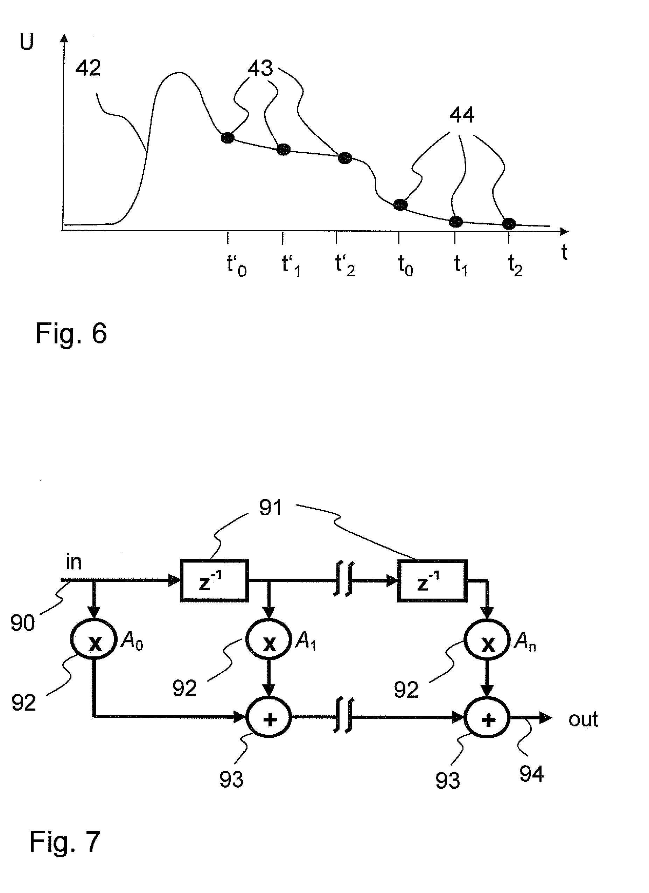

Der Aufbau des programmierbaren Filters 9 gemäß einer Ausführungsform der Erfindung ist schematisch in Fig. 6 dargestellt. Der programmierbare Filter 9 beinhaltet im Idealfall zwei Filterkerne, welche Optimalfilter zum Reset-Pegelverlauf 43 und/oder zum Signal-Pegelverlauf 44 abbilden.

In Fig. 7 ist dabei nur ein Filterkern gezeigt. Gegebenenfalls kann aber auch ein einzelner Filterkern sowohl für den Reset-, als auch den Signal-Wert 43, 44 verwendet werden. Für jedes N sind die Filterkoeffizienten $A_K$, zusammen mit der effektiven Bandbreite B, im Kenngrößenspeicher 29 abgelegt, der Bestandteil der Recheneinrichtung 5 sein kann (siehe Fig. 3).

Die Filterkoeffizienten sind in Weiterbildung der Erfindung so eingerichtet, dass die Impulsantwort des Filters mit dem "typischen" CCD-Signal korreliert. Die entspricht dem Optimalfilter für das CCD-Signal.

In der idealisierten Darstellung der Fig. 5 ist der Verlauf des Reset-Werts 43 nach dem Reset-Gate-Impuls und des Signal-Werts 44 nach dem Schaltsignal des horizontalen Schiebetakts 41 im Wesentlichen zeitunabhängig. In diesem Fall wären demgemäß auch die Filterkoeffizienten zu den einzelnen Abtastzeitpunkten gleich. Daher würden alle Abtastwerte gleich zum Gesamtergebnis beitragen. Bei einem tatsächlichen Signal ist dies jedoch typischerweise nicht der Fall. Demgemäß sind die Filterkoeffizienten in Weiterbildung der Erfindung dem tatsächlichen zu erwartenden Signal angepasst.

Fig. 6 zeigt dazu noch einmal genauer den zeitlichen Verlauf des CCD-Signals, wie er am Eingang des Analog-Digital-Wandlers 23 vorliegt. Beispielhaft werden der Reset-Wert 43 und der Signalwert 44 jeweils dreimal abgetastet. Die Abtastzeitpunkte des Reset-Werts sind mit den Zeichen $t'_0$, $t'_1$ und $t'_2$ und die Abtastzeitpunkte des Signal-Werts 44 mit den Zeichen $t_0$, $t_1$ und $t_2$ gekennzeichnet.

Wie anhand des Signalverlaufs zu erkennen ist, ist das Signal an den verschiedenen Abtastzeitpunkten nicht gleich. Vielmehr nähert sich das Signal einem endgültigen Wert an. Demgemäß werden den verschiedenen Abtastzeitpunkten in Weiterbildung der Erfindung verschiedene Filterkoeffizienten zugeordnet.

So kann für den Abtastzeitpunkt $t'_0$ ein kleinerer Filterkoeffizient $A_0$ angesetzt werden, als für den Abtastzeitpunkt $t'_1$. Da der Pegel mit laufender Zeit sowohl für den Reset-Wert 43, als auch für den Signal-Wert 44 auf den Zielwert einschwingt, werden umgekehrt fortschreitend andere Filterkoeffizienten verwendet. Allgemein werden die Filterkoeffizienten so gewählt, dass sie den Signalverlauf des CCD-Signals abbilden und die Unterschiede der Abtastwerte zu den verschiedenen Zeitpunkten ausgleichen. Ein so parametrierter Filter stellt einen Optimalfilter dar.

Anhand des in Fig. 6 gezeigten Signalverlaufs wird auch ersichtlich, dass die Abtastwerte von der Pixelfrequenz und von der Anzahl der Abtastungen abhängen. Um diesem Effekt Rechnung zu tragen, ist die Recheneinrichtung 5 in Weiterbildung der Erfindung eingerichtet, die Koeffizienten abhängig vom Verlauf des CCD-Signals auszuwählen. Insbesondere können dazu mehrere Sätze von Filterkoeffizienten im Speicher für Kenngrößen 29 gespeichert werden, die verschiedenen Pixelfrequenzen und/oder einer verschiedenen Anzahl N von Abtastungen des Reset- und Signalwerts 43, 44 zugeordnet sind, wobei die Recheneinrichtung 5 eingerichtet ist, den Satz von Filterkoeffizienten anhand der ermittelten optimalen Pixelfrequenz oder der ermittelten optimalen Anzahl N von Abtastungen des Reset- und Signalwerts auszuwählen und an den programmierbaren Filter 9 zu übergeben.

Der Filterkern, wie ihn Fig. 7 zeigt, umfasst Verzögerungsglieder 91, mit denen die am Eingang 90 des programmierbaren Filters 9 anliegenden Abtastwerte sukzessive verzögert werden. Intermittierend zu den Verzögerungsgliedern 91 sind Abzweige mit Multiplikatoren 92 geschaltet. In die Multiplikatoren 92 sind die Filterkoeffizienten Ak geladen, so dass die Multiplikatoren 92 die Abtastwerte mit den Filterkoeffizienten $A_k$ multiplizieren. Die Produkte werden mit einem oder mehreren Addierern 93 zu einem einzelnen Wert summiert.

Die Verzögerungsglieder 91 bewirken, dass die aufgrund der sukzessiven Abtastung zeitversetzt vorliegenden Abtastwerte gleichzeitig an den jeweiligen Multiplikatoren 92 anliegen, somit gleichzeitig multipliziert und durch die Addierer 93 summiert werden. Auf diese Weise liegt am Ausgang 94 des programmierbaren Filters 9 das summierte und gewichtete Ergebnis der Mehrfachabtastung des Reset- oder Signal-Werts 43, 44 vor.

Das eigentliche CCD-Signal wird nun durch digitales, korreliertes Doppel-Abtasten mittels der in Fig. 3 gezeigten Einrichtung 26 bestimmt. Hierfür wird die Differenz des Reset-Wertes 43 und des Signal-Wertes 44 ermittelt.

Um den Gleichanteil des Dunkelsignals zu eliminieren wird mittels der Einrichtung 27 eine Schwarzwertklemmung durchgeführt. Hierfür wird das Signal von optisch abgedeckten Pixeln digital gemittelt und von allen Pixelwerten abgezogen. Als Ergebnis bleibt ein schwarzwertkorrigierter Wert pro Pixel, welcher an weitere Verarbeitungseinheiten übertragen werden kann.

Die wichtigen Rauschkenngrößen, das Ausleserauschen, welches im Folgenden mit dem Symbol $R_{noise}$ gekennzeichnet wird, und das Dunkelsignalrauschen des CCD- Sensors 3, welches im Folgenden mit dem Symbol G gekennzeichnet wird, sind in Weiterbildung der Erfindung im gesamten Temperaturbereich charakterisiert, also gemessen und/oder rechnerisch ermittelt. Die zur kompletten Beschreibung des Rauschmodells verwendeten Daten sind dabei gemäß der in Fig. 3 gezeigten Ausführungsform in einem Kenngrößenspeicher 29 der Recheneinrichtung 5 abgelegt.

Ebenso kann der Kenngrößenspeicher auch extern vorhanden sein, wobei die Daten von der Recheneinrichtung 5 dann über eine Schnittstelle abgerufen werden.

In der Recheneinrichtung 5 wird nun für jeden Betriebsmodus die optimale Anzahl der Abtastpunkte N bestimmt. Durch übergeordnete Kamerastrukturen, wie etwa die Benutzerschnittstelle 10 wird der gewünschte Betriebsmodus als Betriebsparameter 11 übermittelt. Diese Betriebsparameter 11 beinhalten beispielsweise den gewählten Bildausschnitt, das Optimierungskriterium, sowie eventuell eine gewünschte minimale Bildrate oder ein maximales Rauschen.

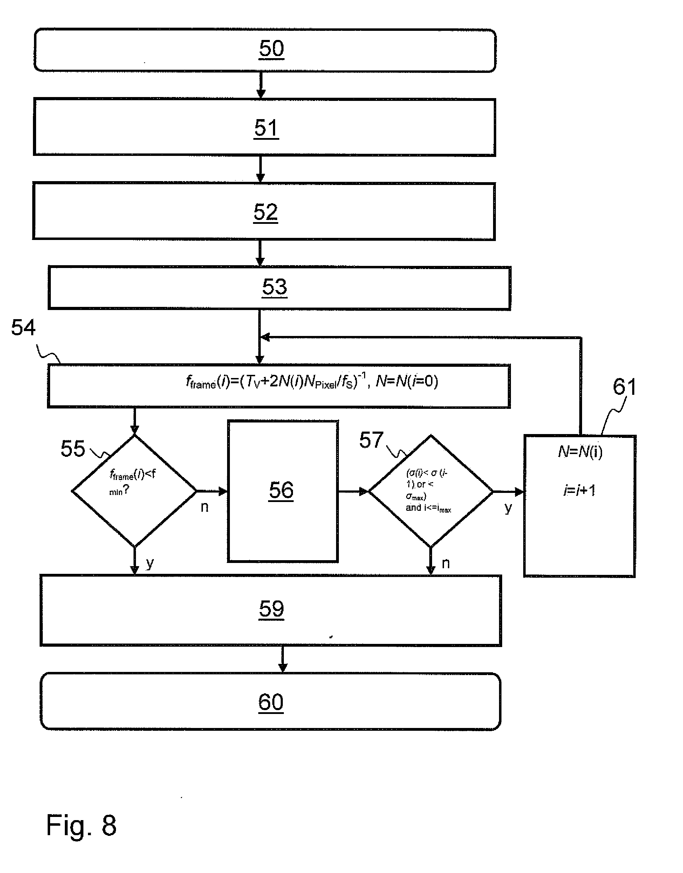

Ein Ausführungsbeispiel eines Optimierungsalgorithmus ist in Form eines Programmablaufplanes in Fig. 8 dargestellt. Der Programmablauf ist lediglich beispielhaft und kann in vielfältiger Weise variiert werden. Beispielsweise kann der Algorithmus auch mit schrittweise verminderten Werten für die Anzahl N der Abtastungen durchlaufen werden.

Nach Start der Routine, Schritt 50, werden aus dem gewünschten Bildausschnitt und dem Timing zum Auslesen des eingesetzten CCD-Sensors 3, die Anzahl der auszulesenden Pixel $N_{Pixel}$, sowie der Anteil $T_v$ der Auslesezeit, in dem keine Daten ausgelesen werden, bestimmt, Schritt 51.

Die aktuelle Temperatur T des Sensors wird, beispielsweise über einen Temperatursensor ausgelesen, Schritt 52.

Es ist ersichtlich, dass die vorstehend genannten Schritte 51, 52 nicht in dieser Reihenfolge durchgeführt werden müssen.

Aus dem Kenngrößenspeicher 29 werden die Datensätze $R_{noise}$ (Ti) und G(Ti) von Temperaturen gelesen, die in der Umgebung der aktuellen Arbeitstemperatur liegen. Über ein Interpolationsverfahren wird der Datensatz $R_{noise}$ (T) und G(T) ermittelt, beispielsweise durch lineare Interpolation zwischen den benachbarten abgelegten Temperatur-Datensätzen, Schritt 53.

Es erfolgt nun die Bestimmung des minimalen Rauschens. Es wird dazu eine Schleife über alle unterstützten Werten N der Anzahl von Abtastungen des Reset- und/oder Signalwerts 43, 44 durchgeführt, welche aufsteigend durchlaufen werden. Der Index der Schleife sei i.

Im Normalfall wird das Rauschen mit steigendem Index i geringer werden bis das Rausch-Minimum erreicht ist. Im Normalfall dominiert bei N=1 das Ausleserauschen. Innerhalb der Schleife werden folgende Schritte durchgeführt:

Zuerst wird die Bildfrequenz berechnet, Schritt 54. Die Bildfrequenz $f_{Bild}$ (i) kann dazu von der Recheneinrichtung 5, ohne Beschränkung auf das spezielle Ausführungsbeispiel gemäß Fig. 8 anhand der folgenden Beziehung ermittelt werden: $f_{Bild}$ (i)=$(T_V + 2 \cdot N(i) \cdot N_{Pixel}/f_s)^{-1}$

$f_s$ ist dabei, wie bereits oben angegeben, die Taktfrequenz der Abtastung des Analog-Digital-Wandlers. N(i) ist die angesetzte Anzahl N zum Index i.

Ist die Bildfrequenz $f_{Bild}$(i) kleiner als eine festgelegte, beispielsweise vom Benutzer gewünschte minimale Bildfrequenz, wird die Schleife beendet. Als Ergebnis bleibt der Wert N des letzten Durchlaufs N(i-1). Damit wird der Programmablauf mit Schritt 59 fortgesetzt. In diesem Schritt werden anhand der bestimmten optimalen Anzahl N die Filterkoeffizienten $A_k$ aus dem Kenngrößenspeicher 29 gelesen und an den programmierbaren Filter 9 übergeben.

Ist die Bildfrequenz $f_{Bild}$(i) größer als eine festgelegte, minimale Bildfrequenz, wird die Schleife hingegen mit der Berechung 56 fortgesetzt, wo die Bandbreite B(N(i)) des Digitalfilters aus dem Kenngrößenspeicher gelesen wird. Näherungsweise kann für diese Bandbreite der Wert $f_s/N(i)$ angesetzt werden.

Das zu erwartende Rauschen, kann dabei gemäß der folgenden Beziehung errechnet werden:

$$Noise = \sqrt{\frac{C^2 \cdot G(T)}{f_{image}(N)} + 8kT \cdot R_{noise}(N) \cdot B(N)}$$

Generell kann dann unter Variation des Parameters N das minimale Rauschen ermittelt werden. In obiger Gleichung bezeichnen:

   Noise: die erwartete Standardabweichung bei dunklem Bild, die Überlagerung von Generations-Rekombinations-Rauschen und Ausleserauschen, referenziert auf die Spannung am Eingang des Analog-Digital-Wandlers.

C: den Konversionsfaktor, welcher das Verhältnis von der Anzahl der Elektronen am Eingang des Ausgangsverstärkers des CCD-Sensors 3 zur den zugehörigen Spannung am Eingang des Analog-Digital-Wandlers 23 beschreibt. Diese Konstante umfasst also die Kenngrößen der Ausgangsverstärkung im CCD-Sensor 3 und einer eventuellen Verstärkung im analogen Teil der Kamera-Vorrichtung 1.

   G(T): ein aus dem Speicher ausgelesener Wert des Generations-Rekombinations-Rauschen zur gemessenen Temperatur, Anzahl der Elektronen pro Zeit,

   $f_{image}$ (N): die aus der ermittelten Pixelfrequenz resultierende Bildfrequenz,

   $R_{noise}$ (N): ein aus dem Speicher ausgelesener Wert des Ausleserauschens zur angesetzten Anzahl N der Abtastungen des Reset -, beziehungsweise -Sognal-Werts 43, 44.

   B(N): ein aus dem Speicher ausgelesener Wert der Bandbreite, oder die gemäß der Beziehung $f_s/N$ ermittelte Bandbreite des programmierbaren Filters 9, wobei $f_s$ die Abtastfrequenz des Analog-Digital-Wandlers 23 bezeichnet und

   kT: das Produkt aus Boltzmann-Konstante und der gemessenen Arbeitstemperatur.

Die Parameter $R_{noise}$ (N), G (T) und B (N) stellen Kenngrößen der Kamera-Vorrichtung 1 dar. Deren aktuelle Werte werden, wie auch anhand der obigen Gleichung ersichtlich ist, durch die variablen Betriebsparameter beeinflusst.

Das Ergebnis der Berechnung wird in dem Entscheidungsschritt 57 folgendermaßen ausgewertet:

   Ist das Rauschen verglichen mit dem letzten Schleifendurchlauf gewachsen, gilt also Noise(i)>Noise(i-1), dann wird die Schleife abgebrochen und N (i-1) als optimale Anzahl von Abtastungen identifiziert. Wenn das Rauchen ein gewünschtes maximales Rauschen unterschreitet, wird die Schleife ebenfalls abgebrochen und N(i) wird als optimale Anzahl von Abtastungen identifiziert.

Der Wert N ist damit ermittelt und in Schritt 59 werden die entsprechenden Koeffizienten des programmierbaren Filters 9 zum Wert N aus dem Speicher geladen, um diese für die nächste Bildaufnahme zu verwenden und an die entsprechenden Komponenten zu übermitteln. Im Speziellen werden die Filterkoeffizienten 18 von der Recheneinrichtung 5 an den programmierbaren Filter 9 ausgegeben. Weiterhin wird ein von der Recheneinrichtung 5 erzeugtes Signal 15 an den Taktgenerator 7 ausgegeben, mit welchem dieser die Pixelfrequenz so anpasst, dass bei der vorgegebenen Taktfrequenz des weiteren Taktgenerators 24 eine jeweils N-fache Abtastung des Reset-Werts 43 und des Signal-Werts 44 ermöglicht wird.

Zusätzlich kann in Schritt 60, welcher das Ende der Prozedur kennzeichnet, die zu erwartende Rauschkenngröße 17 an die Benutzerschnittstelle 10 ausgegeben werden.

Ist hingegen das Rauschen verglichen mit dem letzten Schleifendurchlauf nicht gewachsen, sondern gesunken, wird die Schleife fortgesetzt. Dazu wird in Schritt 61 der Index i inkrementiert und der dem Index i zugeordnete nächst höhere Wert N der Abtastungen ermittelt. Mit diesem neuen Wert N wird dann die Berechnung mit Schritt 54, also der Ermittlung der zum Wert N gehörenden Bildrate fortgesetzt.

Die Erfindung eignet sich nicht nur dazu, ein optimales Signal-Rausch-Verhältnis für ungekühlte Kamera-Vorrichtungen 1 zu erzielen.

Auch bei gekühlten Kamera-Vorrichtungen 1, die aufgrund einer niedrigeren Arbeitstemperatur ein geringeres Dunkelrauschen aufweisen, ergeben sich mit der Erfindung erhebliche Vorteile. Insbesondere ist dies der Fall, wenn ein bestimmter Höchstwert des Signal/Rauschverhältnisses vorgegeben ist, beispielsweise durch eine Benutzereingabe. In diesem Fall kann dann mittels der erfindungsgemäßen Vorrichtung auch die Kühlleistung reduziert werden, ohne den vorgegebenen Wert des Signal-Rausch-Verhältnisses zu überschreiten. Insbesondere kann die Kühlleistung auf der Basis der erfindungsgemäß ermittelten, zu erwartenden, Rauschleistung durch die Recheneinrichtung 5 geregelt werden. Demgemäß ist in Weiterbildung der Erfindung vorgesehen, dass die erfindungsgemässe Kamera-Vorrichtung 1 eine regelbare Kühleinrichtung zur Kühlung des CCD-Sensors 3) aufweist, wobei die Recheneinrichtung 5 dazu eingerichtet ist, die zur Erzielung eines vorgegebenen Signal-Rausch-Verhältnisses erforderliche Temperatur des CCD-Sensors 3 zu ermitteln und das Kühlsystem auf diese Temperatur zu regeln.

Die Ansteuerung der aktiven Kühlung kann unabhängig von der Optimierung des Ausleserauschens vorgenommen werden, wobei die Zeitskalen typischerweise weit größer sind, als die Zeit einer Bildaufnahme. Die Ansteuerung kann von einer übergeordneten Einheit, z. B. der Benutzerschnittstelle 10 oder der Recheneinrichtung 5 durchgeführt werden.

Werden die vom Anwender geforderten Rauschparameter mit oben dargestellter Optimierung nicht erreicht, kann die Kamera-Vorrichtung 1 kurzzeitig mit maximaler Kühlleistung betrieben werden. Der Sensor weist in diesem Fall eine niedrigere Temperatur auf, wodurch das Generation-Rekombinations-Rauschen reduziert wird. Eine permanente Kühlung mit maximaler Kühlleistung führt zu einer starken Erwärmung des Gehäuses, da über die Oberfläche des Kameragehäuses nur eine bestimmte Wärmeabstrahlung gewährleistet werden kann. Zusätzliche Kühlmaßnahmen, wie zum Beispiel Lüfter oder Wasserkühlungen sind aufwendig und im Labor oft nicht praktikabel. Durch eine kurzzeitige Erhöhung der Kühlleistung während der Bildaufnahme wird eine starke Erwärmung des Kameragehäuses vermieden.

Denkbar sind hier verschiedene Varianten:

- die Recheneinrichtung 5 kann aufgrund von vermessenen Charakteristiken und Messwerten, wie der Gehäusetemperatur und eventuell der Leistungsaufnahme der Kamera-Vorrichtung 1 das Optimum der Kühlleistung bestimmen.
- anhand von Testaufnahmen im Dunkeln kann der Dunkelstrom bestimmt und hiervon auf die Temperatur des CCD-Sensors 3 geschlossen werden.

Damit kann die Kamera-Vorrichtung 1 automatisch die Temperatur und damit den Dunkelstrom minimieren.

Im Folgenden werden ein Ausführungsbeispiel eines Messablaufs einer Fluoreszenzmessung und ein Vergleich mit einem nicht erfindungsgemäß rauschoptimierten Meßsystem beschrieben.

Eine Fluoreszenzmessung an einer lebenden Zelle mittels der erfindungsgemäßen Kamera-Vorrichtung 1 kann mit den folgenden Schritten erfolgen:

1. Detektion der Zellgrenzen unter normaler Belichtung, beispielsweise mit Weißlicht,
2. Objektsegmentierung
3. Auswahl eines Bildausschnittes. Dieser Bildausschnitt enthält dann die mit Fluoreszenzlicht aufzunehmenden Probenteile.
4. Korrektur des Bildausschnittes, gegebenenfalls durch eine Benutzereingabe,
5. Rauschoptimierte Ansteuerung des CCD-Sensors 3 durch Kontroller 30 und Taktgenerator 7).

Um den Gewinn durch die Erfindung zu verdeutlichen, sollen einige Vereinfachungen am Rauschmodell eingeführt werden. Zuerst soll davon ausgegangen werden, dass die Erfindung mit einer festen Abtastfrequenz und mit variierbarer Anzahl N von Abtastungen des Signal- und Reset-Wertes realisiert wurde. Es ergibt sich $f_{Pixel}=f_s/(2 \cdot N)$. Die

analoge Signalverarbeitung ist nicht variierbar und somit ist $R_{noise}$ eine Konstante. Die Filterkoeffizienten sollen einem einfachen Integrator entsprechen und das Abtasttheorem soll eingehalten sein. Für große N kann die Bandbreite zu $B=f_{Pixel}$ approximiert werden. Den Anteil der Auslesezeit, welcher für vertikale Schiebetakte nötig ist, wird vernachlässigt, somit ergibt sich $f_{image}=f_{Pixed}/N_{Pixel}$. Mit diesen Vereinfachungen ergibt sich für das Rauschmodell

$$Noise = \sqrt{\frac{C^2 \cdot G(T)}{f_{image}(N)} + 8kTR_{noise} \cdot f_{image}(N) \cdot N_{Pixel}} \quad \texttt{mit}$$

image $(N)=f_s/(2 \cdot N \cdot N_{Pixel})$.

Ein solch vereinfachtes Rauschmodell ließe sich auch direkt analytisch in der Recheneinrichtung (5) realisieren.

Das Gesamtrauschen des Systems hat ein Minimum von

$$Noise, \min = \sqrt[4]{16kTR_{noise} \cdot C^2 \cdot G(T) \cdot N_{pixel}} \sim \sqrt[4]{N_{pixel}}$$

bei

$$f_{image,\min} = \sqrt{\frac{C^2 \cdot G(T)}{N_{pixel} \cdot 8kTR_{noise}}} \sim \frac{1}{\sqrt{N_{pixel}}} \cdot$$

Die Formeln verdeutlichen folgende Fakten: Verglichen mit einer Standard-Kamera mit dominantem Ausleserauschen kann ein erheblicher Gewinn im Gesamtrauschen erzielt werden. Das Minimum im Rauschen der Kamera-Vorrichtung 1 hängt von der Größe des gewählten Bildausschnitts ab. Wird die Kamera-Vorrichtung 1 beispielsweise so eingestellt, dass ein sechzehntel des Vollbildes ausgewählt wird, steigt die Bildrate um das Vierfache bei einer gleichzeitigen Erhöhung der Pixelfrequenz auf das Vierfache N=4. Die Standardabweichung sinkt verglichen mit dem Vollbild auf die Hälfte. Da die Kenngrößen der Kamera-Vorrichtung 1 in dem Kenngrößenspeicher 29) abgelegt sind, besteht nicht die Notwendigkeit weitere Bildaufnahmen vorzunehmen. Die rauschoptimierte Aufnahme wird gezielt durchgeführt und die Belichtungsenergie wird optimal eingesetzt.

Bezugszeichenliste:

1    Kamera-Vorrichtung

3    CCD-Sensor

5    Recheneinrichtung

7    Taktgenerator für Pixelfrequenz

8    Einrichtung zur Ermittlung der Bilddaten

9    programmierbarer Filter

10    Benutzerschnittstelle

11    Bildaufnahmeparameter

12    Abtasttakt

13    Bilddaten

14    Arbeitstemperatur

15    Pixelfrequenz

16    Systemtakt

17    Abtasttakt für Analog-Digital-Wandler

18    von 5 an 9 ausgegebene Filterkoeffizienten

22    analoger Filter

23    Analog-Digital-Wandler

24    Taktgenerator

26    Einrichtung zum digitalen, korrelierten Doppel-Abtasten

27    Einrichtung zur Schwarzwertklemmung

29    Speicher für Kenngrößen

30    Kontroller

32    Treiberschaltung

33    digitaler Teil der Kamera-Vorrichtung 1

34    analoger Teil der Kamera-Vorrichtung 1

40    Reset-Gate-Signal

41    Phase der Horizontalschiebetakte

42    Ausgangssignal

43    Reset-Wert

44    Signal-Wert

50    Start Routine

51    Berechnung der Pixelanzahl aus 11

52    Bestimmung der Temperatur 14 und der Kenngrößen 29

53    Start der Optimierung

54    Berechnung der Bildrate des CCD-Sensors

55    Abbruchbedingung für die minimale Bildrate von 11

56    Berechnung des zu erwartenden Rauschens aus Generations-Rekombinations-Rauschen und Ausleserauschen

57    Abbruchbedingung für die Rauschoptimierung

59    Start des nächsten Optimierungsschrittes

60    Auslesen der Koeffizienten für die ermittelte Pixelfrequenz

61    Start des Auslesens des CCD-Sensors

70    Takt von 7, Pixelfrequenz

90    Eingang von 9

91    Verzögerungsglied von 9

92    Multiplikator von 9

93    Addierer von 9

94    Ausgang von 9

400   Reset-Gate-Impuls

**Patentansprüche**

1.  Kamera-Vorrichtung (1) umfassend wenigstens

    - einen CCD-Sensor (3),
    - einen Analog-Digital-Wandler (23) und
    - eine Recheneinrichtung (5),
    wobei mit dem Analog-Digital-Wandler (23) das analoge Ausgangssignal des CCD-Sensors (3) in digitale Werte gewandelt wird, wobei mit der Recheneinrichtung (5) anhand von variablen Betriebsparametern (11) der Kamera-Vorrichtung (1) die Pixelfrequenz ermittelbar ist, bei der bei gegebener Abtastfrequenz des Analog-Digital-Wandlers (23) das Rauschen des Bildsignals minimal ist, und wobei die Kamera-Vorrichtung (1) eine Einrichtung zur Ansteuerung des CCD-Sensors (3) mit der von der Recheneinrichtung (5) ermittelten Pixelfrequenz umfasst.

2.  Kamera-Vorrichtung (1) nach Anspruch 1, **dadurch gekennzeichnet, dass** die variablen Betriebsparameter die Arbeitstemperatur (14) des CCD-Sensors und / oder wenigstens einen Bildaufnahmeparameter (11), vorzugsweise einen gewählten Bildausschnitt und / oder einen Auslesemodus des CCD-Sensors, beispielsweise ein Binning und/oder eine Unterabtastung umfassen.

3.  Kamera-Vorrichtung (1) nach einem der vorhergehenden Ansprüche, **dadurch gekennzeichnet, dass** ein Taktgenerator (7) vorgesehen ist, mit dem die Pixelfrequenz für das Auslesen des CCD-Sensors (3) variierbar ist, wobei dabei das Taktsignal (70) des Taktgenerators (7) die Pixelfrequenz des CCD-Sensors (3) erzeugt, wobei mit dem Analog-Digital-Wandler (23) das analoge Ausgangssignal des CCD-Sensors (3) in digitale Werte gewandelt wird und wobei mit einem weiterer Taktgenerator (24) der Analog-Digital-Wandler (23) derart ansteuerbar ist, dass aufgrund der Taktfrequenz des weiteren Taktgenerators (24) bei niedriger Pixelfrequenz sowohl ein Signal-Wert (44), als auch ein Reset-Wert (43) eines Pixels jeweils mehrfach hintereinander mit dem Analog-Digital-Wandler (23) abtastbar ist und wobei von einem programmierbarer Filter (9) die abgetasteten Signal-Werte (44) und die abgetasteten Reset-Werte (43) zusammenfassbar sind.

4.  Kamera-Vorrichtung (1) nach einem der vorhergehenden Ansprüche, **dadurch gekennzeichnet, dass** mit dem programmierbare Filter (9) aus den mehrfach hintereinander abgetasteten Werten des Signal-Werts (44) ein einzelner Signal-Wert und aus den mehrfach hintereinander abgetasteten Werten des Reset-Werts(43) ein einzelner Reset-Wert oder eine einzelne Differenz des Signal-Werts (44) und des Reset-Werts (43) erzeugbar ist, wobei die mehrfach hintereinander abgetasteten Werte sowohl des Signal-Werts (44) als auch des Reset-Werts(43) mit Koeffizienten wichtbar sind und vorzugsweise die Recheneinrichtung (5) eingerichtet ist, die Koeffizienten abhängig von der ermittelten Pixelfrequenz einzustellen.

**5.** Kamera-Vorrichtung (1) nach dem vorhergehenden Anspruch, **dadurch gekennzeichnet, dass** die gespeicherten Filterkoeffizienten mit dem erwarteten, typischen oder gemittelten zeitlichen Verlauf der Signal-Werte (44) und der Reset-Werte (43) korreliert sind.

**6.** Kamera-Vorrichtung nach einem der vorhergehenden Ansprüche, **dadurch gekennzeichnet, dass** die Recheneinrichtung (5) dazu eingerichtet ist, die Pixelfrequenz und die Abtastfrequenz zu bestimmen, wodurch die Anzahl von Abtastungen des Signal- und /oder Reset-Werts (44, 43) festgelegt wird, für welche das zu erwartende Rauschen der Bilddaten (13) am niedrigsten ist.

**7.** Kamera-Vorrichtung (1) nach einem der vorhergehenden Ansprüche, **dadurch gekennzeichnet, dass** die Recheneinrichtung (5) eingerichtet ist, die Pixelfrequenz anhand eines Rauschmodells des CCD-Sensor (3) zu ermitteln, wobei vorzugsweise von der Recheneinrichtung (5) bei variierter Anzahl von Abtastungen des Signal- und/oder des Reset-Werts (44, 43) jeweils das zu erwartende Rauschen berechnet, der kleinsten Wert bestimmt und daraus die Pixelfrequenz festlegt wird.

**8.** Kamera-Vorrichtung (1) nach dem vorhergehenden Anspruch, **dadurch gekennzeichnet, dass** die Recheneinrichtung (5) eingerichtet ist, ein zu erwartendes Rauschen anhand eines Rauschmodells zu ermitteln, wobei das Rauschmodells das Ausleserauschen sowie das Generations-Rekombinations-Rauschen umfasst und die Anzahl der Abtastungen des Signal- und/oder des Reset-Werts (44, 43) zu bestimmen, für die das zu erwartende Rauschen der Bilddaten (13) am niedrigsten ist.

**9.** Kamera-Vorrichtung (1) gemäß einem der beiden vorstehenden Ansprüche, **dadurch gekennzeichnet, dass** die Recheneinrichtung (5) dazu eingerichtet ist, die Pixelfrequenz anhand der Beziehung:

$fPixel = fs/(2.N)$ zu berechnen, wobei fs die Abtastfrequenz des Analog-Digital-Wandlers und N die Anzahl der Abtastungen des Signalwerts (44) oder die Anzahl der Abtastungen des Reset-Werts (43) bezeichnen, für welche der kleinste Wert des Rauschens berechnet wurde.

**10.** Kamera-Vorrichtung (1) nach einem der vorhergehenden Ansprüche, **dadurch gekennzeichnet, dass** der programmierbare Filter (9) mehrere Verzögerungsglieder (91) und mehrere Multiplikatoren (92) umfasst, welche so verschaltet sind, dass am Eingang (90) der Multiplikatoren (92) die mehrfach hintereinander abgetasteten Werte des Signal-Werts (44) oder des Reset-Werts (43) zeitgleich anliegen und somit zeitgleich mit ladbaren Filterkoeffizienten multipliziert werden.

**11.** Kamera-Vorrichtung (1) nach einem der vorhergehenden Ansprüche, **dadurch gekennzeichnet, dass** mit der Recheneinrichtung (5) zu Optimierungskriterien jeweils die optimale Anzahl von Abtastungen des Reset-Werts (43) und des Signal-Werts (44) bestimmbar ist, wobei die Optimierungskriterien

- die Bestimmung des Betriebsmodus mit globalem Rauschminimum ohne Einbeziehung der Bildrate,
- die Bestimmung des Betriebsmodus mit dem minimalen Rauschen bei vorgegebener minimaler Bildfrequenz, oder
- die Bestimmung des Betriebsmodus mit der maximalen Bildfrequenz bei vorgegebenem maximalen Rauschen umfassen.

**12.** Kamera-Vorrichtung (1) nach einem der vorhergehenden Ansprüche, **dadurch gekennzeichnet, dass** eine regelbare Kühleinrichtung zur Kühlung des CCD-Sensors (3) vorgesehen ist, wobei von der Recheneinrichtung (5) die zur Erzielung eines vorgegebenen Signal-Rausch-Verhältnisses erforderliche Arbeitstemperatur (14) des CCD-Sensors ermittelbar ist und in der Kühleinrichtung eingestellt wird oder während der Aufnahme kritischer Proben das Kühlsystem kurzzeitig mit maximaler Leistung betrieben wird.

**13.** Verfahren zur Bildaufnahme mittels eines CCD-Sensors (3) in einer Kamera-Vorrichtung (1) mit den folgenden Verfahrensschritten:

- mit einem Analog-Digital-Wandler (23) werden analoge Signale der Pixel in digitale Signale gewandelt,
- mit einer Recheneinrichtung (5) wird anhand von variablen Betriebsparametern (11) der Kamera-Vorrichtung (1) die Pixelfrequenz ermittelt, bei der bei gegebener Abtastfrequenz des Analog-Digital-Wandlers (23) das Rauschen des Bildsignals minimal ist, und
- von einer Einrichtung der Kamera-Vorrichtung (1) wird mit der von der Recheneinrichtung (5) ermittelten Pixelfrequenz der CCD-Sensor (3) angesteuert.

**14.** Verfahren nach Anspruch 13, **dadurch gekennzeichnet, dass** als variable Betriebsparameter die Arbeitstemperatur (14) des CCD-Sensors und / oder wenigstens einen Bildaufnahmeparameter (11), vorzugsweise einen gewählten Bildausschnitt und / oder einen Auslesemodus des CCD-Sensors, beispielsweise ein Binning und/oder eine Unterabtastung angewendet werden.

**15.** Verfahren nach einem der Ansprüche 13 oder 14, **dadurch gekennzeichnet, dass** ein Taktgenerator (7) die Pixelfrequenz für das Auslesen des CCD-Sensors (3) variiert, wobei dabei das Taktsignal (70) des Taktgenerators (7) die Pixelfrequenz des CCD-Sensors (3) erzeugt, wobei mit dem Analog-Digital-Wandler (23) analoge Signale der Pixel in digitale Signale gewandelt werden und wobei mit einem weiterer Taktgenerator (24) der Analog-Digital-Wandler (23) so angesteuert wird, dass aufgrund der Taktfrequenz des weiteren Taktgenerators (24) bei niedriger Pixelfrequenz sowohl ein Signal-Wert (44), als auch ein Reset-Wert (43) eines Pixels jeweils mehrfach hintereinander mit dem Analog-Digital-Wandler (23) abgetastet wird und wobei von einem programmierbarer Filter (9) die abgetasteten Signal-Werte (44) und die abgetasteten Reset-Werte (43) zusammengefasst werden.

Fig. 1:

Fig. 2

Fig. 3

$N>1$, $f_{Pixel}=f_S/(2N)$

400

40

41

43

44

42

$1/f_S$   $(N-1)/f_S$   $1/f_S$   $(N-1)/f_S$

Fig. 5

$N=1$, $f_{Pixel}=f_S/2$

400

40

41

43

44

42

$1/f_S$

Fig. 4

Fig. 6

Fig. 7

```
         ┌──────────────────────────────────────┐
         │                 50                   │
         └──────────────────────────────────────┘
                           │
                           ▼
         ┌──────────────────────────────────────┐
         │                 51                   │
         └──────────────────────────────────────┘
                           │
                           ▼
         ┌──────────────────────────────────────┐
         │                 52                   │
         └──────────────────────────────────────┘
                           │
                           ▼
         ┌──────────────────────────────────────┐
         │                 53                   │
         └──────────────────────────────────────┘
```

54

$$f_{frame}(i)=(T_V+2N(i)N_{Pixel}/f_S)^{-1}, \ N=N(i=0)$$

61

55 — $f_{frame}(i)<f_{min}?$

56

57 — $(\sigma(i)<\sigma(i-1) \ \text{or} < \sigma_{max}) \ \text{and} \ i<=i_{max}$

$N=N(i)$

$i=i+1$

n → 56 → y

y (from 55)

n (from 57)

```
         ┌──────────────────────────────────────┐
         │                 59                   │
         └──────────────────────────────────────┘
                           │
                           ▼
         ┌──────────────────────────────────────┐
         │                 60                   │
         └──────────────────────────────────────┘
```

Fig. 8

Europäisches
Patentamt

European
Patent Office

Office européen
des brevets

# EUROPÄISCHER RECHERCHENBERICHT

**Nummer der Anmeldung**

EP 11 17 7672

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 946 033 A (MOONEY PAUL EDWARD [US] ET AL) 31. August 1999 (1999-08-31) | 1,2,6, 13,14 | INV. H04N5/341 H04N5/357 |
| Y | * Abbildungen 1-4 * * Spalte 1 - Spalte 4 * | 3-5, 7-12,15 | |
| Y | US 2004/189798 A1 (HAKAMATA KAZUO [JP]) 30. September 2004 (2004-09-30) | 7-9,11, 12 | |
| A | * Absatz [0001]; Abbildungen 4-7 * * Absatz [0100] - Absatz [0122] * | 1,2,6, 13,14 | |
| Y | US 7 453 986 B1 (ISAKSEN DAVID BRUCE [US]) 18. November 2008 (2008-11-18) | 3,4,15 | |
| A | * Abbildungen 1,5 * * Spalte 10 - Spalte 13 * | 1,6,9,13 | |
| A | US 2009/219058 A1 (OHBA MAKOTO [JP]) 3. September 2009 (2009-09-03) * Abbildungen 4,5,10,11 * * Absatz [0071] * | 1,3,4,6, 7,9,13, 15 | |
| Y | JP 2003 037780 A (FUJI PHOTO FILM CO LTD) 7. Februar 2003 (2003-02-07) | 5 | RECHERCHIERTE SACHGEBIETE (IPC) H04N |
| A | * Abbildungen 2,4,6 * * Absatz [0017] - Absatz [0018] * | 3,4 | |
| Y | JP 8 079629 A (OLYMPUS OPTICAL CO) 22. März 1996 (1996-03-22) * Abbildung 10 * | 10 | |

Der vorliegende Recherchenbericht wurde für alle Patentansprüche erstellt

| Recherchenort | Abschlußdatum der Recherche | Prüfer |
|---|---|---|
| München | 13. Januar 2012 | Keck, Wolfram |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
  Dokument

EPO FORM 1503 03.82 (P04C03)

EP 2 560 374 A1

**ANHANG ZUM EUROPÄISCHEN RECHERCHENBERICHT
ÜBER DIE EUROPÄISCHE PATENTANMELDUNG NR.**
EP 11 17 7672

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2012

| Im Recherchenbericht angeführtes Patentdokument | Datum der Veröffentlichung | Mitglied(er) der Patentfamilie | Datum der Veröffentlichung |
|---|---|---|---|
| US 5946033 A | 31-08-1999 | KEINE | |
| US 2004189798 A1 | 30-09-2004 | KEINE | |
| US 7453986 B1 | 18-11-2008 | KEINE | |
| US 2009219058 A1 | 03-09-2009 | CN 101305602 A<br>US 2009219058 A1<br>WO 2007055114 A1 | 12-11-2008<br>03-09-2009<br>18-05-2007 |
| JP 2003037780 A | 07-02-2003 | KEINE | |
| JP 8079629 A | 22-03-1996 | JP 3618372 B2<br>JP 8079629 A | 09-02-2005<br>22-03-1996 |

EPO FORM P0461

Für nähere Einzelheiten zu diesem Anhang : siehe Amtsblatt des Europäischen Patentamts, Nr.12/82

21